# EUROPÄISCHE PATENTSCHRIFT

(11) **EP 0 284 894 B1**
(45) Veröffentlichungstag und Bekanntmachung des Hinweises auf die Patenterteilung: **29.09.1993**
(21) Anmeldenummer: 88104181.8
(22) Anmeldetag: 16.03.1988
(51) Int. Cl.: B25B 23/00, F16B 25/10

(54) **Befestigungseinrichtung mit Schraube und Impulswerkzeug für universelle Befestigungen**
Fastening device with a screw, and impact tool for universal fastenings
Dispositif de fixation avec vis et outil à chocs pour fixations universelles

(30) Priorität: 24.03.1987 CH 1109/87
(43) Veröffentlichungstag der Anmeldung: 05.10.1988
(73) Patentinhaber: PAT AG, 9100 Herisau (CH)
(72) Erfinder: Enderle, Markus, CH-9063 Stein (CH)
(74) Vertreter: Wildi, Roland

(56) Entgegenhaltungen:
- AT-B- 380 545
- DE-A- 2 427 352
- DE-A- 2 521 555
- DE-A- 2 929 179
- GB-A- 1 292 537
- US-A- 2 143 173

## Beschreibung

Die Erfindung betrifft ein Befestigungsverfahren gemäss dem Oberbegriff des ersten Anspruches.

Zur Befestigung von Gegenständen, wie Türrahmen, Tore, Bilder, Lampen usw., in unterschiedlichen Trägermaterialien in Bauten, wurden bisher, je nach Trägermaterial, verschiedene Elemente verwendet.

An Wänden und Balken aus Holz wurden Holzschrauben, an Betonwänden Dübel aus Kunststoff oder Metall mit Schrauben, und in Wänden aus Backstein, Gips und Holzplatten usw. wurden oft andere Befestigungsmittel eingesetzt. Dies bedeutet, dass eine ganze Reihe von unterschiedlichen Befestigungsmitteln benötigt wurden, die auf Lager gehalten und mitgenommen werden mussten. Zudem wurden nicht nur unterschiedlich grosse Schrauben, sondern auch von den Dübeln, unterschiedliche Dimensionen benötigt, was wiederum die Lagerhaltung erschwerte und zusätzliche Transportkapazität erforderte.

Ein weiterer Nachteil der bisherigen Befestigungsmittel ist darin begründet, dass für die Befestigung in Beton- und Mauerwänden meistens Dübel aus Metall und Kunststoff eingesetzt wurden. Solche Dübel haben die Tendenz, sich nach einigen Jahren zu lösen, weil sie in der Regel eine Federkraft auf die Lochwände ausüben, die infolgedessen mit der Zeit leicht nachgeben. Ein weiterer Nachteil besteht darin, dass das Material von Kunststoffdübel nach einigen Jahren spröde wird oder sonst die Eigenschaften verliert, die es am Anfang hatte und dadurch die Dübel für die unterschiedlichsten Verwendungen geeignet machte.

Um diese Nachteile zu beheben, wurden verschiedene Anstrengungen unternommen, indem verschiedene Schrauben für die am meisten verwendeten Materialien entwickelt wurden. Eine solche gewindeschneidende Schraube ist in DE-A-3 337 534 offenbart. Ferner ist eine selbstbohrende und gewindeschneidende Schraube in DE-A-2 929 179 offenbart. Die beiden Ausführungen sind für Verwendung mit einem Hand- oder Schlagschrauber zusammen vorgesehen. Derartige Schlagschrauber sind beispielsweise in DE-A-3 336 992, DE-A-3 337 206 oder US-A-2 143 173, und ferner ist ein Schraubvorsatz für Handbohrmaschine in DE-A-2 653 939 offenbart.

Der Nachteil dieser obengenannten Ausführungen liegt darin, dass die Schraube und deren Gewinde ohne Rücksicht auf den Schrauber ausgelegt sind. Dies führt naturgemäss dazu, dass die Schrauben nicht auf den Schlagschrauber abgestimmt sind und umgekehrt, so dass keine optimale Zusammenwirkung zwischen den beiden erzielt wird.

Es ist somit Aufgabe der vorliegenden Erfindung, eine optimale Zusammenwirkung zwischen Schlagschrauber und Schraube zu schaffen.

Dabei wird eine möglichst gute Abstimmung des Werkzeuges auf die Schraube und deren Gewinde angestrebt, so dass die Drehkomponente des Werkzeuges tangential zum Gewinde verläuft. Dies bedeutet, dass ein bestimmter Schlagschrauber oder ein bestimmter Schraubvorsatz für die Schraube zu verwenden ist, um eine optimale Verbindung zu schaffen.

Diese Aufgabe ist erfindungsgemäss durch die Merkmale des Kennzeichnungsteils des ersten Patentanspruches gelöst.

Ausführungsformen sind in den abhängigen Ansprüchen umschrieben.

Nachfolgend wird ein Ausführungsbeispiel des erfindungsgemässen Befestigungsverfahrens anhand der Zeichnung näher erläutert. Es zeigen:
- Fig. 1: eine Seitenansicht einer Befestigungseinrichtung, bestehend aus einer Schraube und einem Impulswerkzeug,
- Fig. 2: einen Teilschnitt in der Längsrichtung einer in eine Betonwand eingesetzten Schraube,
- Fig. 3: einen Teil der Schraube nach Fig. 2, um 90° um die eigene Achse gedreht,
- Fig. 4: einen Axialschnitt durch das Impulswerkzeug nach Fig. 1, und
- Fig. 5: einen Variante zu Fig. 3 in grösserem Massstab.

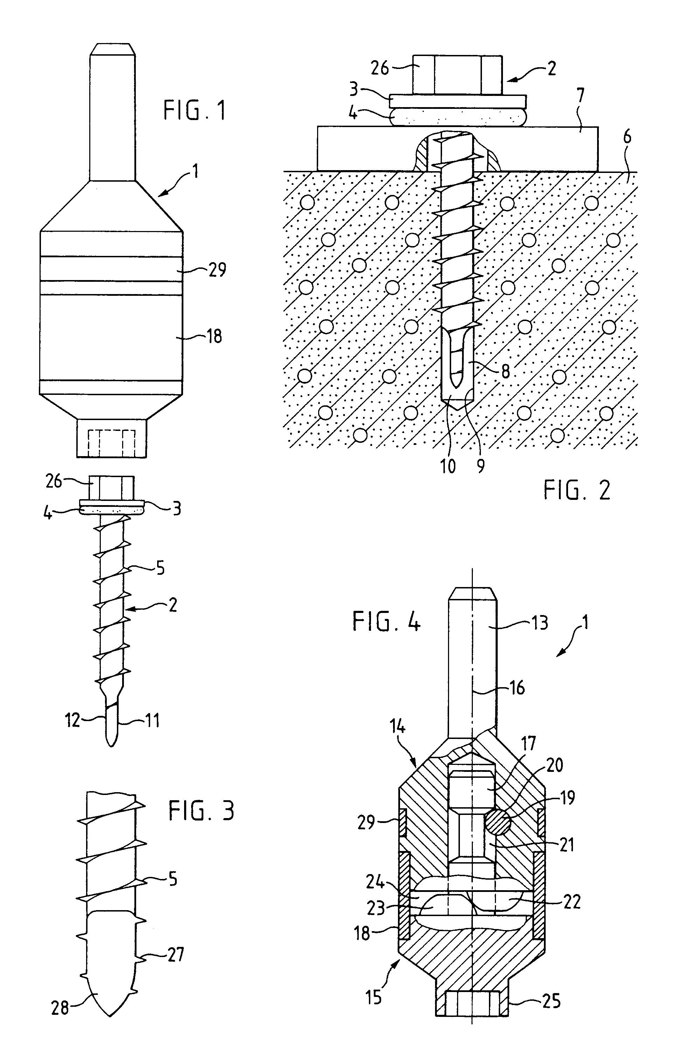

In Fig 1 ist eine aus einem Impulswerkzeug 1 und einer Schraube 2 bestehende Befestigungseinrichtung dargestellt. Auf die Schraube sind eine Metallscheibe 3 sowie ein Dämpfungselement 4 aufgezogen, wobei die Scheibe 3 einstückig mit der Schraube 2 verbunden ist, und das Dämpfungselement 4 aus Gummi besteht und kraftschlüssig am Gewinde 5 der Schraube 2 anliegt.

Die Schneide des Gewindes 5 ist zur Erleichterung des Drehvorganges, insbesondere in Beton, sehr scharf ausgebildet.

Fig. 2 zeigt einen Teilschnitt durch ein Betonwand 6 längs der Achse einer darin eingesetzten Schraube 2, die hier beispielsweise zur Befestigung einer Metallleiste 7 an der Wand 6 dient. Damit das Einsetzen der Schraube 2 erleichtert wird, ist ein freier Raum 8 zwischen der Schraube 2 und der Innenwand 9 eines Bohrloches 10 vorgesehen. Dieser Raum 8 dient zur Aufnahme von Material, das mit der Schraube 2 zum Inneren des Bohrloches 10 befördert wird. Der freie Raum 8 kann teilweise dadurch hergestellt werden, dass der Vorderteil der Schraube 2 an einander gegenüberliegenden Seiten 11 und 12 etwas zusammengedrückt wird, wie dies in den Fig. 1 und 3 gezeigt ist. Das Zusammendrücken erleichtert das Einführen der Schraube in das Bohrloch 10 in der Betonwand 6 und erzeugt eine Schneidewirkung.

Bei der Befestigung der Schraube 2 in das Loch 10 in der Betonwand 6 ist es wichtig, dass das Loch 10 etwas länger ist als die Schraube 2, damit genügend Platz für das nach innen beförderte Material vorhanden ist. Nur dann lässt sich die Schraube 2 einwandfrei in die Betonwand 6 einschrauben.

Das Impulswerkzeug 1 besteht aus einem Antriebs- 14 und einem Abtriebsteil 15 und wird an einem Schaft 13 von einer herkömmlichen Handbohr- oder Handschraubmaschine angetrieben, der dementsprechend für eine Schraubbefestigung ausgebildet ist. Diese nicht dargestellte Maschine überträgt über einen Körper 22 im Antriebsteil 14 bei jeder Umdrehung einen Schlagimpuls auf einen Körper 23 im Abtriebsteil 15, welche Körper 22,23 so bemessen sind, dass die resultierende Kraft oder der Schlagimpuls eine dem Gewindeverlauf entsprechende Richtung hat. Dadurch wird eine möglichst grosse Wirkung der Schlagkraft auf die Drehbewegung der Schraube 2 übertragen.

Der Schlagimpuls wird nur beim Rechtslauf des Antriebsteils 14 auf die Schraube 2 übertragen. Beim Linkslauf überträgt der Antriebsteil 14 keine Schlagimpulse auf die Schraube 2.

Die beiden Körper 22,23 drehen jeweils mit dem Antriebs- 14 oder dem Abtriebsteil 15 um ein Achse 16, längs welcher sich eine Welle 17 des Abtriebselements 15 ersteckt, die von einer Muffe 18 umgeben ist. Die beiden Teile 14 und 15 werden durch einen Zylinderstift 19 zusammengehalten, der in eine Bohrung 20 im Antriebsteil 14 eingesetzt ist und in eine Eindrehung 21 in der Welle 17 eingreift. Der Zylinderstift 19 wird von einem Federring 29 gehalten.

Die Verbindung zwischen dem Antriebs- 14 und dem Abtriebsteil 15 ist wegen der Eindrehung 21 so ausgelegt, dass eine freie Drehbewegung der Teile 14,15 relativ zueinander ohne Eingriff möglich ist.

Zwischen den beiden ineinander eingreifenden Teilen 14,15 ist ein geeignetes Fett im Inneren 24 zur Dämpfung und Herabsetzung des Verschleisses vorgesehen.

Die Schlagimpulse werden durch eine Fassung 26 auf den Sechskantkopf 26 der Schraube 2 übertragen.

Beim Einsetzen der Schraube 2 sind die Sekundärspitze 27 sowie die parallelen Schneiden an den Seiten 11 und 12 von besonderer Bedeutung. Das abgetragene Material wird im Raum 8 angesammelt.

Die Längen der parallelen Schneiden sind so bemessen, dass diese innerhalb der konischen Sekundärspitze 27, kurz bevor diese den grössten Durchmesser erreicht haben, nach aussen hin auslaufen. Dadurch bewirken die nachfolgenden, konisch auslaufenden Spitzen (ohne Schneiden) einen Glätteffekt in den abgebauten Ausnehmungen im Untergrund.

Vor dem kleinsten Durchmesser der konischen Sekundärspitze 27 ist die Primärspitze 28 vorgelagert, welche die Funktion als Zentrierer beim Schneidevorgang übernimmt und in weichen Materialien zusätzlich die Funktion des Bohrers übernimmt, in welchen nicht vorgebohrt werden muss.

Der Einschraubvorgang kann durch die Drehzahl und den Druck auf das Impulswerkzeug gesteuert werden. Der Energie der Impulsschläge nimmt mit zunehmender Drehzahl zu. Sukzessiv entsteht so eine schraubenförmige Einfräsung, die sich spielfrei an die Kontur die Schraube 2 anpasst.

Der Einschraubvorgang ist dann beendet, wenn das Dämpfungselement 4 auf den zu befestigenden Teil 7 aufliegt, das unterhalb an der integrierten Unterlagsfläche 3 vorgelagert ist. Durch das weitere Eindrehen der Schraube 2 wird das Dämpfungselement 4 zusammengedrückt, so dass einerseits die radiale Reibung ansteigt und somit der Impulsschlag gedämpft wird. Die Schraube 2 kann deshalb nicht überdreht werden.

Durch die im Untergrund eingeschnittenen Ausnehmungen kann die Schraube 2 ein- und nachher wieder ausgeschraubt werden. Die Demontage ist mit einem Impulswerkzeug mit Linksgang oder mit einem Schraubenschlüssel durchführbar. Das Ein- und Ausschrauben kann je nach Material einige oder mehrere Male wiederholt werden, ohne dass die Schraube 2 durch eine Ausführung mit grösseren Abmessungen ersetzt werden muss.

Zum Einsetzen der Schraube 2 in einer Wand 6 muss in der Regel zuerst ein Loch 10 gebohrt werden, was aber nicht unbedingt notwendig ist, sofern es sich um ein weiches Material, beispielsweise bestimmte Holzarten, handelt.

Der Durchmesser des Loches 10 entspricht immer dem Schaftdurchmesser der Schraube 2.

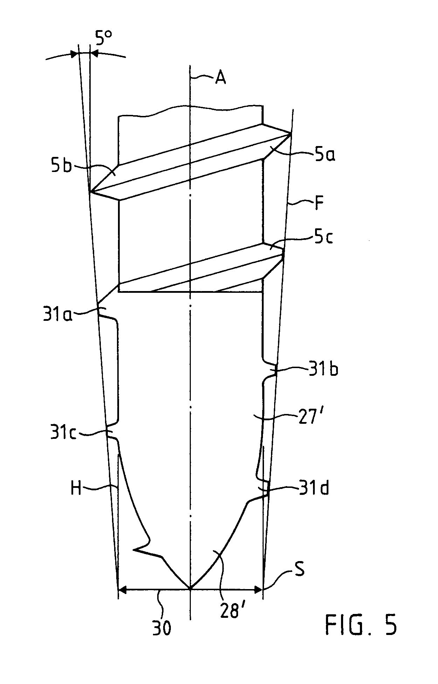

In Fig. 5 ist ein Ausführungsbeispiel der Schraubenspitze mit der Primär- 28ʹund der Sekundärspitze 27ʹ gezeigt, wobei die Mantelfläche F auf Spitzenhöhe S die verlängerte Schafthülle H schneidet. Im gezeigten Beispiel beträgt die Neigung zwischen der Mantelfläche F und der Schraubenachse A etwa 5°. Dieser Winkel kann aber sowohl kleiner als auch grösser sein und kann beispielsweise im Bereich von 2 bis 10° liegen. In diesem Zusammenhang wird darauf hingewiesen, dass der Vorderteil des mit einer scharfen Kante in der Mantelfläche versehenen Gewindes von 31a bis 31d dazu dient, das Material zu lösen, damit das nachfolgende Gewinde 5a bis 5c gewissermassen einen Glätteffekt im Innengewinde der Lochwandung ausüben und sich darin festbeissen kann.

Weil keine Dübel verwendet werden, hat sich die beschriebene Befestigungsart als dauerhafter als bisherige Ausführungen erwiesen. Da das Gewinde 5 direkt, und nicht über Dübel in das Material eingreift, wird eine sichere und dauerhafte Befestigung erreicht.

Die Schraube kann entweder zwei oder nur ein Gewinde aufweisen. Die Ausführung mit zwei Gewinde bietet normalerweise einen festeren Griff, wogegen diejenige mit nur einem Gewinde in der Herstellung günstiger ist. Es ist somit weitgehend eine kostenmässige Überlegung, welche der beiden Ausführungen eingesetzt wird, wobei auch der spezielle Verwendungsfall eine Rolle spielt.

## Patentansprüche

1. Verfahren zum Befestigen und Lösen einer Schraube in Backstein, Gips oder Holzplatten mittels eines rotiernden Impulswerkzeuges mit einem Antriebsteil (14) und einem Abtriebsteil (15), die bei jeder Umdrehung mindestens einmal gegeneinander anschlagen, dadurch gekennzeichnet, dass jeder Schlag von einem Element (22) des Antriebsteils (14) gegen ein anderes Element (23) des Abtriebsteil (15) derart anschlägt, dass die Schlagrichtung tangential zum Schraubengewinde (5) und in einer dem Gewindeverlauf entsprechenden Richtung erfolgt, und dass die beiden Elemente (22,23) nach dem Schlag übereinandergleiten.

2. Verfahren nach Anspruch 1, dadurch gekennzeichnet, dass man eine Schraube mit einer Primärspitze und einer darüber angeordneten Sekundärspitze verwendet, wobei der Schraubenmantel kegelstumpfförmig verläuft und einen Winkel von 2 bis 5° mit der Schraubenachse bildet.

3. Verfahren nach Anspruch 1 oder 2, dadurch gekennzeichnet, dass man eine Schraube mit zwei parallelen Gewinden verwendet.

4. Verfahren nach einem der Ansprüche 1 bis 3, dadurch gekennzeichnet, dass der Antriebsteil pro Umdrehung zweimal gegen den Abtriebsteil anschlägt.

## Claims

1. Process of fixing and releasing a bolt in brick, gypsum or wooden boards by means of a rotating percussion tool having a drive section (14) and an output element (15) which strike at one another at least once per rotation, **characterised in that** each blow of one element (22) of the drive section (14) against another element (23) of the output element (15) strikes in such a manner that the strike direction is tangentially to the bolt thread (5) and in a direction corresponding with the course of the thread, and that the two elements (22, 23) slide above one another after the stroke.

2. Process according to claim 1, **characterised in that** a bolt with a primary tip and thereabove a secondary tip is used, in which respect the bolt casing extends in a truncated form whilst establishing an angle of between 2 and 5° relative to the bolt axis.

3. Process according to claim 1 or 2, **characterized in that** a bolt with two parallel threads is used.

4. Process according to one of claims 1 to 3, **characterized in that** the drive section strikes twice per rotation against the output element.

## Revendications

1. Procédé pour fixer et desserrer une vis dans de la brique, du plâtre ou des panneaux de bois au moyen d'un outil tournant à impulsions, comprenant une partie motrice (14) et une partie de sortie (15) qui, à chaque rotation, frappent au moins une fois l'un contre l'autre, **caractérisé en ce** que chaque choc entre un élément (22) de la partie motrice (14) et un autre élément (23) de la partie de sortie (15) frappe de telle façon que la direction de frappe est orientée tangentiellement par rapport au filet de vis (5) et à une direction correspondant à l'allure du filetage, et que les deux éléments (22, 23) glissent l'un sur l'autre après le choc.

2. Procédé selon la revendication 1, caractérisé en ce que l'on utilise une vis avec une pointe primaire et une pointe secondaire placée au-dessus de cette dernière, la surface latérale de la vis présentant une forme tronconique et formant avec l'axe de la vis un angle de 2 à 5°.

3. Procédé selon l'une des revendications 1 ou 2, caractérisé en ce que l'on utilise une vis avec deux filetages parallèles.

4. Procédé selon l'une des revendications 1 à 3, caractérisé en ce que, pour chaque rotation, la partie motrice heurte deux fois la partie de sortie.
